# EUROPÄISCHE PATENTSCHRIFT

(11) **EP 3 088 770 B1**
(45) Veröffentlichungstag und Bekanntmachung des Hinweises auf die Patenterteilung: **21.02.2018**
(21) Anmeldenummer: 15165288.0
(22) Anmeldetag: 27.04.2015
(51) Int. Cl.: F16H 1/20, A01D 41/14, F16H 21/36, F16H 57/00, F16H 57/021, F16H 57/023, A01D 34/30, F16H 57/02

(54) **WINKELGETRIEBEANORDNUNG FÜR OSZILLIEREND ANGETRIEBENE MÄHMESSER**
ANGULAR GEAR ASSEMBLY FOR OSCILLATING DRIVEN MOWER BLADE
AGENCEMENT D'ENGRENAGE ANGULAIRE POUR LAME DE COUPE À ENTRAÎNEMENT OSCILLANT

(43) Veröffentlichungstag der Anmeldung: 02.11.2016
(73) Patentinhaber: EWM Eichelhardter Werkzeug- und Maschinenbau GmbH, 57612 Eichelhardt (DE)
(72) Erfinder: Jung, Marco, D-56587 Oberhonnefeld (DE); Schumacher, Heinrich Günter, D-57612 Eichelhardt (DE)
(74) Vertreter: Neumann Müller Oberwalleney & Partner Patentanwälte

(56) Entgegenhaltungen:
- EP-A1- 0 819 370
- DE-A1-102004 037 580
- DE-C- 922 309
- US-A- 4 446 683

## Beschreibung

Die vorliegende Erfindung betrifft eine Winkelgetriebeanordnung für oszillierend angetriebene Mähmesser, mit einem Getriebegehäuse, einem Rotor, der im Getriebegehäuse über wenigstens ein erstes Lager um eine erste Rotationsachse drehbar gelagert ist, einer Eingangswelle, die winklig zur ersten Rotationsachse drehbar angeordnet ist, wobei der Rotor einen Aufnahmeraum mit einer Aufnahmeöffnung aufweist, einer durch die Aufnahmeöffnung in den Aufnahmeraum des Rotors eingreifenden Kurbelwelle, die im Aufnahmeraum über wenigstens ein zweites Lager um eine radial zur ersten Rotationsachse versetzte zweite Rotationsachse drehbar gelagert ist, einem mit dem Rotor drehfest verbundenes und über wenigstens ein drittes Lager um die erste Rotationsachse drehbar gelagertes Antriebselement, und im Getriebegehäuse angeordnete Stützmittel, an denen sich das dritte Lager axial abstützt.
Die DE 10 2004 037 580 A1 zeigt eine Winkelgetriebeanordnung für oszillierend angetriebene Mähmesser nach dem Oberbegriff des Anspruchs 1. Die bekannte Winkelgetriebeanordnung weist ein Kegelradgetriebe mit einer Eingangswelle und einem winklig zur Eingangswelle angeordneten Rotor auf. In dem Rotor ist eine Kurbelwelle exzentrisch aufgenommen. Auf einem innenliegenden Längsende des Rotors ist ein Antriebselement in Form eines Kegelrades drehfest aufgesetzt, wobei das Kegelrad mittels einer Wellenmutter am Rotor fixiert ist. Das Kegelrad ist axial an einem Wälzlager abgestützt. Das Wälzlager wiederum ist an einer am Gehäuse angeformten ringförmigen Axialschulter abgestützt ist, wobei die Axialschulter als Stützmittel und als Anschlagelement dient. Um das Kegelrad des Rotors und das zugehörige Wälzlager in das Getriebegehäuse einsetzen zu können, ist in einem oberen Gehäuseabschnitt eine Zugangsöffnung im Gehäuse ausgebildet. Das Wälzlager wird von oben in das Gehäuseinnere eingesetzt und bis zum Erreichen des Anschlagelements nach unten gedrückt. Der Rotor selbst wird durch eine im unteren Gehäuseabschnitt ausgebildete Gehäuseöffnung von unten ins Gehäuseinnere eingesetzt und in das Kegelrad gedrückt. Anschließend wird die Wellenmutter durch die obere Zugangsöffnung auf den Rotor aufgeschraubt.
Aus der EP 0 819 370 A1 ist eine handgeführte, selbstfahrende Arbeitsmaschine bekannt, die eine Antriebsvorrichtung für ein hin und her bewegbares Arbeitswerkzeug aufweist. Die Antriebsvorrichtung besteht aus einer in einem Gehäuse gelagerten Antriebswelle, die parallel zu den Drehachsen einer Kurbelscheibe und einer Kurbelwelle angeordnet ist. Ein Kegelrad eines Kurbelgetriebes ist drehfest mit der Kurbel verbunden, wobei das Kegelrad gegenüber dem Gehäuse mittels eines Kugellagers drehbar gelagert ist. Das Kugellager ist lösbar am Gehäuse abgestützt.
Die DE 922 309 C zeigt eine Einrichtung zum Antrieb eines hin und her gehend bewegten Messers einer Mähmaschine mittels einer rotierenden Welle, die über eine Kurbelscheibe mit Kurbelzapfen einen in einem zur Bewegungsebene des Messers senkrecht stehenden Lagerzapfen drehbar gelagerten Schwinghebel antreibt, der an seinem einen Ende mit dem Messer gelenkig verbunden ist. Der Kurbelzapfen ist mit der auf der rotierenden Welle befestigten Kurbelscheibe derart verbunden, dass die Längsachse des Kurbelzapfens sich mit der zum Lagerzapfen des Schwinghebels senkrecht stehenden Achse der rotierenden Welle in der Achse des Lagerzapfens schneidet.
Aufgabe der vorliegenden Erfindung ist es, eine einfach zu montierende und wartungsfreundliche Getriebeanordnung bereitzustellen.
Diese Aufgabe ist erfindungsgemäß bei einer Winkelgetriebeanordnung für oszillierend angetriebene Mähmesser der eingangs genannten Art dadurch gelöst, dass die Stützmittel lösbar am Getriebegehäuse befestigt sind. Erfindungsgemäß ist somit vorgesehen, dass die Stützmittel für das dritte Lager, welches das drehfest mit dem Rotor verbundene Antriebselement lagert, zur Montage bzw. Demontage eines im Getriebegehäuse aufgenommenen Winkelgetriebes gelöst, respektive entfernt werden können. Auf diese Weise können die Stützmittel aus dem Gehäuseinneren, d.h. aus einem vom Getriebegehäuse umschlossenen Gehäuseraum, entnommen werden, sodass das dritte Lager und das Antriebselement ungehindert in das Gehäuseinnere eingesetzt werden können. Durch die Lösbarkeit der Stützmittel wird die Montage der Winkelgetriebeanordnung vereinfacht, da die Einbaurichtung nicht mehr durch ein das dritte Lager abstützendes und am Gehäuse angeformtes Anschlagelement vorgeben ist.

Vorzugsweise ist das dritte Lager mit einer zur Aufnahmeöffnung gerichteten Unterseite des dritten Lagers an den Stützmitteln abgestützt. Mit anderen Worten sind die Stützmittel unterhalb des dritten Lagers, d.h. zwischen dem dritten Lager und der Aufnahmeöffnung, im Gehäuseinneren angeordnet. Wenn die Stützmittel gelöst, respektive entfernt sind, können neben dem Rotor und der Kurbelwelle somit auch das dritte Lager und das Antriebselement von unten, insbesondere durch eine von der Kurbelwelle und/oder dem Rotor durchgriffene Gehäuseöffnung, montiert werden. Mit unterhalb ist ein Bereich der Winkelgetriebeanordnung in Richtung der Aufnahmeöffnung bzw. um die Aufnahmeöffnung des Rotors gemeint. Oberhalb des dritten Lagers ist eine um eine dritte Rotationsachse drehend gelagerte Eingangswelle der Winkelgetriebeanordnung angeordnet. Die dritte Rotationsachse ist winklig zur ersten und zweiten Rotationsachse ausgerichtet. Die Begriffe oben und unten bzw. oberhalb und unterhalb sind somit nur in Relation zum Getriebegehäuse zu verstehen, d.h. eine Einbaulage des Getriebegehäuses wird damit nicht vorgegeben, sodass das Getriebegehäuse selbst nicht notwendigerweise mit der Aufnahmeöffnung oder der von der Kurbelwelle und/oder dem Rotor durchgriffenen Gehäuseöffnung nach unten gerichtet angeordnet sein muss.

Zweckmäßigerweise können die Stützmittel einen Sicherungsring aufweisen, wobei der Sicherungsring in eine sich in Umfangsrichtung erstreckende Innennut des Getriebegehäuses eingreift. Dadurch können die Stützmittel besonders einfach im Gehäuseinneren des Getriebegehäuses befestigt und wieder gelöst werden.

Weiterhin kann an der Unterseite des dritten Lagers ein weiterer lösbarer Sicherungsring vorgesehen sein, der in eine sich in Umfangsrichtung erstreckende Nut des Antriebselements eingreift. Dadurch wird die Montierbarkeit des Antriebselements und des dritten Lagers verbessert, da sich das Antriebselement beim Einsetzen von unten durch die Aufnahmeöffnung an der Unterseite des dritten Lagers abstützt. Darüber hinaus kann der Rotor einfacher in das Antriebselement eingesetzt werden, da der weitere Sicherungsring ein Auswandern des Antriebselements nach oben verhindert. Zudem werden das dritte Lager sowie der Rotor und das Antriebselement im Betrieb der Winkelgetriebeanordnung zusätzlich axial gestützt.

In bevorzugter Weise ist der Verlauf eines Innendurchmessers des Getriebegehäuses vom Antriebselement im Bereich eines größten Außendurchmessers des Antriebselements bis zu einer von der Kurbelwelle durchgriffenen Gehäuseöffnung stets größer als der maximale Außendurchmesser des Antriebselements. Mit anderen Worten ist das Gehäuseinnere ausreichend groß ausgestaltet, damit das dritte Lager und das Antriebselement von unten, d.h. durch die von der Kurbelwelle und/oder dem Rotor durchgriffenen Gehäuseöffnung, eingesetzt bzw. wieder entnommen werden können. Somit kann nicht nur der Rotor und die Kurbelwelle, sondern auch das dritte Lager und das dem Rotor zugeordnete Antriebselement von unten durch die Gehäuseöffnung in das Getriebegehäuse eingesetzt bzw. herausgenommen werden. Neben einer weiteren Gehäuseöffnung, durch welche eine Eingangswelle des Winkelgetriebes ins Gehäuseinnere eingreift, benötigt das Getriebegehäuse somit zur Montage des Winkelgetriebes keine weitere Zugangsöffnung. Dadurch wird ein einfach herzustellendes und kompaktes Getriebegehäuse bereitgestellt. In an sich bekannter Weise kann das Getriebegehäuse weitere kleinere Öffnungen, beispielsweise zur Be- und Entlüftung, zur Schmierung in Form von Schmiernippeln oder ein Schauglas, umfassen, wobei diese Öffnungen derart klein sind, dass das dritte Lager oder das Antriebselement nicht hindurchgeführt werden können. Ebenso sind diese Öffnungen für einen Wellenaustritt ungeeignet und im Durchmesser zu klein, um für den Antrieb notwendige Komponenten ins Gehäuseinnere durch diese kleinen Öffnungen einzusetzen. Insbesondere sind die Durchmesser dieser kleinen Öffnungen jeweils nicht größer als 5 Zentimeter, insbesondere nicht größer als 2 Zentimeter. Vorzugsweise ist das Getriebegehäuse einteilig ausgebildet. D.h. das einteilige Getriebegehäuse weist keinen abnehmbaren Gehäusedeckel oder dergleichen auf und umschließt das Gehäuseinnere, respektive einen Gehäuseraum, in dem der Rotor und die Kurbelwelle sowie die Eingangswelle untergebracht sind.

Des Weiteren kann im Getriebegehäuse wenigstens ein axiales Anschlagelement vorgesehen sein, wobei eine von der Aufnahmeöffnung bzw. von der durch die Kurbelwelle und/oder dem Rotor durchgriffenen Gehäuseöffnung weggerichtete Oberseite des dritten Lagers mit dem Anschlagelement in Anlage steht. Auf diese Weise wird die Montage des dritten Lagers vereinfacht, wobei das dritte Lager und das Antriebselement weiterhin von unten durch die Gehäuseöffnung eingesetzt bzw. entnommen werden können. Insbesondere sind die Oberseite und die Unterseite des dritten Lagers parallel zueinander ausgerichtet.

Gemäß einem Aspekt der vorliegenden Erfindung ist vorgesehen, dass die Kurbelwelle mit einem Stirnrad drehfest verbunden ist, wobei die Kurbelwelle und das Stirnrad separate Bauteile sind. Das Stirnrad, auch Zylinderrad genannt, steht mit einer im Getriebegehäuse konzentrisch zur ersten Rotationsachse angeordneten Innenverzahnung in Eingriff. Die Kurbelwelle weist somit keine eigene mit der Innenverzahnung in Eingriff stehende Außenverzahnung auf. Dadurch kann die Kurbelwelle unabhängig von einem durch das Stirnrad und die Innenverzahnung einzuhaltenden Übersetzungsverhältnis ausgelegt werden.

Vorzugsweise ist in einer Mantelfläche des Rotors eine Durchgangsöffnung derart vorgesehen, dass das Stirnrad radial zur zweiten Rotationsachse durch die Durchgangsöffnung in den Aufnahmeraum einsetzbar ist. Auf diese Weise kann das Stirnrad über die in der Mantelfläche des Rotors ausgebildete Durchgangsöffnung in den Aufnahmeraum des Rotors eingesetzt werden. Wenn das Stirnrad eingesetzt ist, kann die Kurbelwelle von unten durch die Aufnahmeöffnung in den Aufnahmeraum eingesetzt und in das Stirnrad geschoben werden. Dadurch wird die Montage der Kurbelwelle im Rotor vereinfacht. Des Weiteren kann ein Außendurchmesser des Stirnrades größer als ein Innenradius des den Rotor lagernden ersten Lagers sein. Weiterhin kann ein maximaler radialer Abstand zwischen der ersten Rotationsachse und einem Außenumfang des Stirnrades größer als ein Innendurchmesser des zweiten die Kurbelwelle lagernden Lagers sein. Durch die Trennung des Stirnrades von der Kurbelwelle muss das Stirnrad beim Einsetzen nicht mehr durch das erste und/oder das zweite Lager geführt werden. Damit kann die Kurbelwelle schlanker als das Stirnrad, d.h. mit einem kleineren Außendurchmesser, hergestellt werden.

Gemäß einem weiteren Aspekt können Sicherungsmittel vorgesehen und derart ausgebildet sein, dass das Stirnrad axial gesichert ist. Die Sicherungsmittel können eine Sicherungsscheibe aufweisen, wobei die Sicherungsscheibe in eine Umfangsnut der Kurbelwelle eingreifen kann.

Weiterhin können die Sicherungsmittel eine von der Kurbelwelle durchgriffene Distanzhülse aufweisen, wobei die Distanzhülse zwischen dem Stirnrad und dem zweiten Lager derart angeordnet ist, dass das Stirnrad axial am zweiten Lager abgestützt ist. Zweckmäßigerweise können die Distanzhülse und die Kurbelwelle drehfest miteinander verbunden sein. Weiterhin kann vorgesehen sein, dass die Distanzhülse und die Kurbelwelle mittels einer Feder-Nut-Verbindung drehfest miteinander verbunden sind, und dass die Kurbelwelle und das Stirnrad mittels einer Feder-Nut-Verbindung drehfest miteinander verbunden sind, wobei für die beiden Feder-Nut-Verbindungen, nämlich die Feder-Nut-Verbindung zwischen der Kurbelwelle und dem Stirnrad und für die Feder-Nut-Verbindung zwischen der Kurbelwelle und der Distanzhülse, insgesamt nur eine einzige Feder vorgesehen ist. Vorteilhafterweise greift die Feder für die Feder-Nut-Verbindungen in eine erste Axialnut des Stirnrades und in eine zur ersten Axialnut ausgerichtete zweite Axialnut der Distanzhülse ein. Dadurch wird eine einfach herzustellende und einfach zu montierende Abstützung und/oder Sicherung des Stirnrades bereitgestellt. Die eine Feder kann beispielsweise eine Scheibenfeder sein. Grundsätzlich können zur drehfesten Verbindung der Distanzhülse mit der Kurbelwelle und/oder dem Stirnrad mit der Kurbelwelle auch andere Verbindungen, insbesondere eine Stirnverzahnung, vorgesehen sein.

Gemäß einer Ausgestaltung der vorliegenden Erfindung kann die Winkelgetriebeanordnung ein Kegelradgetriebe mit Exzentertrieb aufweisen. Das Kegelradgetriebe kann eingangsseitig eine Eingangswelle aufweisen, die insbesondere über ein Kegelrad mit dem Antriebselement des Rotors ineinandergreift. Das Antriebselement kann ebenfalls ein Kegelrad sein.

Unabhängig von der Ausgestaltung als Kegelrad können das Antriebselement und der Rotor zwei separate Bauteile sein. Dies vereinfacht die Montage der Winkelgetriebeanordnung. Das Antriebselement kann beispielsweise mittels einer Feder-Nut-Verbindung drehfest mit dem Rotor verbunden sein. Zudem kann wenigstens ein Sicherungsring oder eine Wellenmutter das Antriebselement am Rotor fixieren.

Gemäß einem noch weiteren Aspekt der vorliegenden Erfindung kann vorgesehen sein, dass die Winkelgetriebeanordnung weiterhin eine im Getriebegehäuse über wenigstens ein viertes Lager um eine winklig zur ersten Rotationsachse angeordnete dritte Rotationsachse drehbar gelagerte Eingangswelle aufweist. Die Eingangswelle kann mit einem weiteren Antriebselement, das mit dem dem Rotor zugeordneten Antriebselement in Wirkverbindung steht, drehfest verbunden sein. Mit der Eingangswelle kann ein Antriebsrad verbunden sein, insbesondere eine Riemenscheibe. Das Antriebsrad kann unmittelbar mit dem weiteren Antriebselement mittels Drehsicherungsmittel drehfest verbunden sein. Die Drehsicherungsmittel sind vorzugsweise radial von der Eingangswelle beabstandet. Die Drehsicherungsmittel stellen somit eine direkte Drehsicherung zwischen dem Antriebsrad und dem weiteren Antriebselement dar. Die unmittelbare drehsichere Verbindung zwischen dem Antriebsrad und dem weiteren Antriebselement kann insbesondere durch wenigstens ein stiftartiges Element dargestellt sein, dass insbesondere in eine radial von der Eingangswelle beabstandete erste Bohrung des Antriebsrades und in eine axial zur ersten Bohrung ausgerichtete zweite Bohrung des der Eingangswelle zugeordneten weiteren Antriebselements eingesetzt sein kann. Die vorgenannten Drehsicherungsmittel schließen allerdings nicht aus, dass die Eingangswelle drehfest mit dem Antriebsrad und/oder dem weiteren Antriebselement verbunden sein kann. Zur axialen Fixierung des Antriebsrades an der Eingangswelle kann beispielsweise eine Wellenmutter auf die Eingangswelle aufgeschraubt oder ein Sicherungsring aufgeklemmt sein.

Ein bevorzugtes Ausführungsbeispiel der Erfindung wird in den Zeichnungen dargestellt und nachstehend beschrieben. Hierin zeigt:
- Figur 1: eine Winkelgetriebeanordnung gemäß einer Ausführungsform in Schnittansicht;
- Figur 2: eine Teilansicht der Winkelgetriebeanordnung entlang der Schnittlinie A-A aus Figur 1; und
- Figur 3: die Winkelgetriebeanordnung aus Figur 1 in perspektivischer Darstellung.

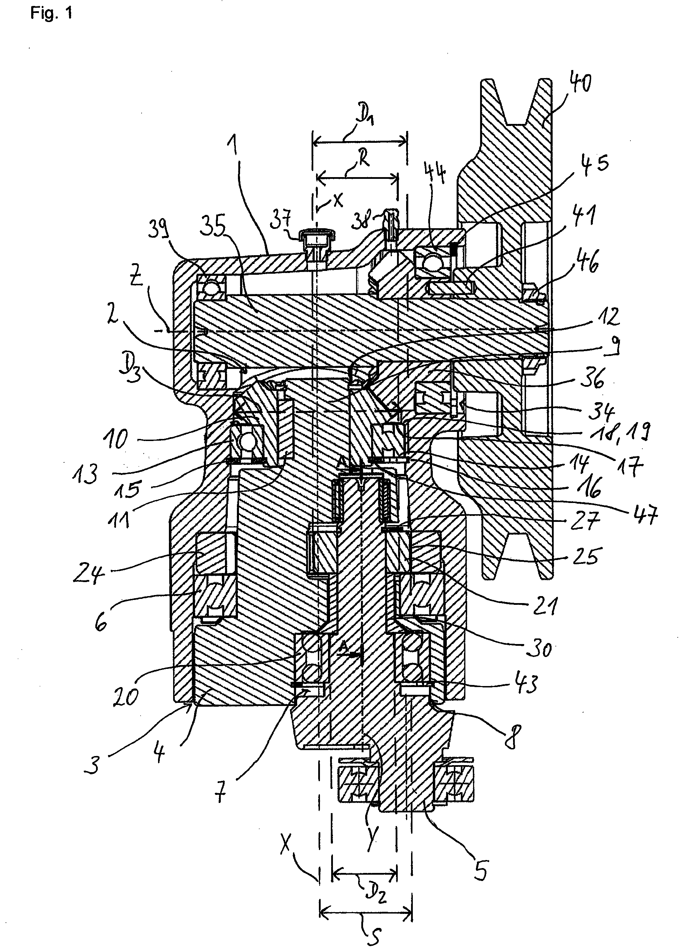

In den Figuren 1 bis 3 ist eine Winkelgetriebeanordnung gemäß einer Ausführungsform der vorliegenden Erfindung dargestellt. Die Winkelgetriebeanordnung weist einen Exzentertrieb auf, bei dem eine rotatorische Bewegung in eine translatorische Hin- und Herbewegung zum oszillierenden Antrieb von nicht gezeigten Mähmessern einer ebenfalls nicht dargestellten Erntemaschine in der Landwirtschaft umgewandelt wird.

In der Figur 1 ist erkennbar, dass die Winkelgetriebeanordnung ein einteilig ausgebildetes Getriebegehäuse 1 aufweist, das einen Gehäuseraum 2 umschließt. Im Getriebegehäuse 1 ist eine erste Gehäuseöffnung 3 ausgebildet, durch die ein Rotor 4 und eine exzentrisch zum Rotor 4 gelagerte Kurbelwelle 5 in den Gehäuseraum 2 eingreift.

Der Rotor 4 ist im Getriebegehäuse 1 über ein erstes Lager 6 um eine erste Rotationsachse X drehbar gelagert. Der Rotor 4 weist einen exzentrisch angeordneten Aufnahmeraum 7 mit einer parallel zur ersten Gehäuseöffnung 3 liegenden Aufnahmeöffnung 8 auf. In dem Aufnahmeraum 7 ist die Kurbelwelle 5 um eine radial zur ersten Rotationsachse X versetzte zweite Rotationsachse Y drehbar gelagert. An einem innenliegenden Längsendbereich 9 des Rotors 4 ist ein Antriebselement 10 in Form eines ersten Kegelrades aufgesetzt. Das erste Kegelrad 10 ist mittels einer Feder-Nut-Verbindung 11 drehfest mit dem Rotor 4 verbunden. Des Weiteren ist ein erster Sicherungsring 12 vorgesehen, der das erste Kegelrad 10 axial am Rotor 4 fixiert. Das erste Kegelrad 10 ist über ein drittes Lager 13 um die erste Rotationsachse X drehbar gelagert. Zudem ist das erste Kegelrad 10 axial über einen weiteren Sicherungsring 47 an einer zur Aufnahmeöffnung 8 bzw. zur ersten Gehäuseöffnung 3 gerichteten Unterseite 14 des dritten Lagers 13 und an einer von der Unterseite 14 weggerichteten Oberseite 17 des dritten Lagers 13 abgestützt. Das dritte Lager 13 wiederum ist mit der Unterseite 14 an einem zweiten Sicherungsring 15 abgestützt. Der zweite Sicherungsring 15 ist lösbar am Getriebegehäuse 1 befestigt und greift in eine sich in Umfangsrichtung erstreckende Innennut 16 des Getriebegehäuses 1 ein. An der von der Unterseite 14 weggerichteten Oberseite 17 des dritten Lagers 13 ist am Getriebegehäuse 1 ein in den Gehäuseraum 2 ragendes Anschlagelement 18 vorgesehen. Das Anschlagelement 18 ist am Getriebegehäuse 1 angeformt und weist eine sich in Umfangsrichtung erstreckende ringförmige Axialschulter 19 auf. Im eingebauten Zustand des dritten Lagers 13 steht die Oberseite 17 des dritten Lagers 13 mit der Axialschulter 19 des Anschlagelements 18 in Anlage.

Die Kurbelwelle 5 ist im Aufnahmeraum 7 des Rotors 4 über ein zweites Lager 20 und über ein Nadellager 42 um die radial zur ersten Rotationsachse X versetzte zweite Rotationsachse Y drehbar gelagert. Das zweite Lager 20 ist über einen dritten Sicherungsring 43 axial am Rotor 4 abgestützt. Die Kurbelwelle 5 ist mit einem Stirnrad 21 drehfest verbunden, wobei die Kurbelwelle 5 und das Stirnrad 21 separate Bauteile sind. In einer Mantelfläche 22 des Rotors 4 ist eine Durchgangsöffnung 23 derart vorgesehen, dass das Stirnrad 21 radial zur zweiten Rotationsachse Y durch die Durchgangsöffnung 23 in den Aufnahmeraum 7 eingesetzt werden kann. Das Stirnrad 21 greift in eine konzentrisch zur ersten Rotationsachse X im Gehäuseraum 2 angeordnete Innenverzahnung 24 ein. Die Innenverzahnung 24 ist an einem Innenkranz ausgebildet, der im Gehäuseraum 2 am Getriebegehäuse 1 lösbar befestigt ist. Der Außendurchmesser D₁ des Stirnrads 21 ist größer als ein Innenradius R des ersten Lagers 6. Weiterhin ist ein maximaler radialer Abstand S zwischen der ersten Rotationsachse X und einem Außenumfang 25 des Stirnrads 21 größer als ein Innendurchmesser D₂ des zweiten Lagers 20.

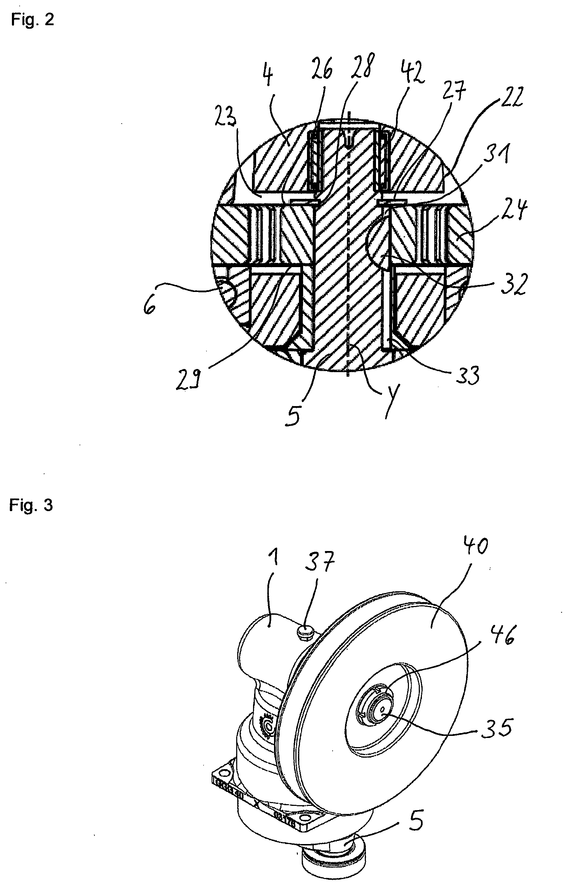

In der Figur 2 sind die Sicherungsmittel zur axialen Sicherung des Stirnrads 21 entlang der in Figur 1 gezeigten Schnittlinie A-A hervorgehoben. Konkret ist an einer zum Kegelrad 10 gerichteten Oberseite 26 des Stirnrads 21 eine Sicherungsscheibe 27 vorgesehen, die in eine Umfangsnut 28 der Kurbelwelle 5 eingreift. An einer von der Oberseite 26 weggerichteten Unterseite 29 des Stirnrads 21 ist eine Distanzhülse 30 vorgesehen. Die Distanzhülse 30 ist von der Kurbelwelle 5 durchgriffen. Die Distanzhülse 30 ist zwischen dem Stirnrad 21 und dem zweiten Lager 20 derart angeordnet, dass das Stirnrad 21 über die Distanzhülse 30 axial am zweiten Lager 20 abgestützt ist. Die Distanzhülse 30 und die Kurbelwelle 5 sind mittels einer Feder-Nut-Verbindung drehfest miteinander verbunden. Konkret weist das Stirnrad 21 eine sich parallel zur ersten bzw. zweiten Rotationsachse X, Y erstreckende und radial nach Innen gerichtete erste Axialnut 31 auf, in die eine in der Kurbelwelle 5 gehaltene Scheibenfeder 32 eingreift. Die Distanzhülse 30 weist ebenfalls eine radial nach Innen gerichetete zweite Axialnut 33 auf, die zusammen mit der ersten Axialnut 31 eine durchgehende Nut bildet. Die Scheibenfeder 32 ist derart angeordnet, dass diese sowohl in die erste Axialnut 31 als auch in die zweite Axialnut 33 eingreift. Auf diese Weise ist sowohl das Stirnrad 21 als auch die Distanzhülse 30 mit der einen Scheibenfeder 32 drehfest mit der Kurbelwelle 5 verbunden.

Neben der ersten Gehäuseöffnung 3, welche von dem Rotor 4 und der Kurbelwelle 5 durchgriffen ist, weist das Getriebegehäuse 1 eine zweite Gehäuseöffnung 34 auf. Konzentrisch zur zweiten Gehäuseöffnung 34 ist eine über ein viertes Lager 39 um eine dritte Rotationsachse Z drehbar gelagerte Eingangswelle 35 angeordnet. An der Eingangswelle 35 ist ein zweites Kegelrad 36, welches in das erste Kegelrad 10 eingreift, drehfest befestigt. Das zweite Kegelrad 36 ist über ein fünftes Lager 44 um die dritte Rotationsachse Z drehbar gelagert. Das fünfte Lager 44 ist mittels einem vierten Sicherungsring 45 axial am Getriebegehäuse 1 fixiert. An einem außenliegenden Längsendbereich der Eingangswelle 35 ist eine Riemenscheibe angeordnet, die über eine auf die Eingangswelle 35 aufgeschraubte Wellenmutter 46 an der Eingangswelle 35 befestigt ist. Weiterhin ist ein Drehsicherungsstift 41 vorgesehen, der in eine radial zur Eingangswelle 35 beabstandete erste Bohrung der Riemenscheibe 40 und in eine zur ersten Bohrung axial ausgerichtete zweite Bohrung des zweiten Kegelrades 36 eingreift, um die Riemenscheibe 40 mit dem zweiten Kegelrad 36 drehfest zu verbinden. Grundsätzlich können in Umfangsrichtung der Riemenscheibe verteilt mehrere der Drehsicherungsstifte 41 vorgesehen sein.
Neben den beiden Gehäuseöffnungen 3, 34 weist das Getriebegehäuse 1 lediglich kleinere Öffnungen auf, welche einen Durchmesser von weniger als zwei Zentimetern aufweisen. Hierzu zählt zum einen eine Öffnung für einen Be- und Entlüftungsfilter 37 und eine Öffnung für einen Schmiernippel 38.
Durch die lösbare Ausgestaltung des zweiten Sicherungsringes 15 können die abtriebsseitigen Komponenten des Winkelgetriebes auf einfache Weise von unten durch die erste Gehäuseöffnung 3 montiert werden. Der Verlauf eines Innendurchmessers des Getriebegehäuses 1 vom ersten Kegelrad 10 im Bereich eines größten Außendurchmessers D₃ des ersten Kegelrades 10 bis zur ersten Gehäuseöffnung 3 ist stets größer als der maximale Außendurchmesser D₃ des ersten Kegelrades 10. Somit ist der Gehäuseraum 2 ausreichend groß ausgestaltet, damit das dritte Lager 13 und das erste Kegelrad 10 von unten durch die erste Gehäuseöffnung 3 in den Gehäuseraum 2 eingesetzt werden können.
Zunächst wird das erste Kegelrad 10 zusammen mit dem dritten Lager 13 durch die erste Gehäuseöffnung 3 in das Getriebegehäuse 1 eingesetzt. Die beiden Bauteile 10, 13 werden soweit in den Gehäuseraum 2 eingebracht, bis die Oberseite 17 des dritten Lagers 13 mit der Axialschulter 19 des Anschlagelements 18 in Anlage kommt. In dieser Einbauposition wird das dritte Lager 13 durch den Sicherungsring 15 axial fixiert, wobei der Sicherungsring 15 in die Innennut 16 eingreift. Anschließend wird die vormontierbare Einheit aus Rotor 4 und Kurbelwelle 5 eingesetzt ebenfalls von unten durch die erste Gehäuseöffnung 3 in den Gehäuseraum 2 eingesetzt. Der Längsendbereich 9 des Rotors 4 wird durch das erste Kegelrad 10 gedrückt. Lediglich zur axialen Fixierung des Rotors 4 muss der Sicherungsring 12 durch die zweite Gehäuseöffnung 34 in den Gehäuseraum 2 eingebracht und auf den Längsendbereich 9 des Rotors 4 aufgesetzt werden. Anschließend kann in an sich bekannter Weise die Eingangswelle 35 und das zweite Kegelrad 36 durch die zweite Gehäuseöffnung 34 in den Gehäuseraum 2 eingesetzt werden. Es versteht sich von selbst, dass das Winkelgetriebe in umgekehrter Reihenfolge wieder zerlegt werden kann, so dass die Erläuterungen zur Montage in analoger Weise auch auf für die Demontage gelten.

### Bezugszeichenliste

- 1: Getriebegehäuse
- 2: Gehäuseraum
- 3: erste Gehäuseöffnung
- 4: Rotor
- 5: Kurbelwelle
- 6: erstes Lager
- 7: Aufnahmeraum
- 8: Aufnahmeöffnung
- 9: Längsendbereich
- 10: erstes Kegelrad
- 11: Feder-Nut-Verbindung
- 12: erster Sicherungsring
- 13: drittes Lager
- 14: Unterseite
- 15: zweiter Sicherungsring
- 16: Innennut
- 17: Oberseite
- 18: Anschlagelement
- 19: Schulter
- 20: zweites Lager
- 21: Stirnrad
- 22: Mantelfläche
- 23: Durchgangsöffnung
- 24: Innenkranz
- 25: Außenumfang
- 26: Oberseite
- 27: Sicherungsscheibe
- 28: Umfangsnut
- 29: Unterseite
- 30: Distanzhülse
- 31: erste Axialnut
- 32: Scheibenfeder
- 33: zweite Axialnut
- 34: zweite Gehäuseöffnung
- 35: Eingangswelle
- 36: zweites Kegelrad
- 37: Be- und Entlüftungsfilter
- 38: Schmiernippel
- 39: viertes Lager
- 40: Riemenscheibe
- 41: Drehsicherungsmittel
- 42: Nadellager
- 43: dritter Sicherungsring
- 44: fünftes Lager
- 45: vierter Sicherungsring
- 46: Wellenmutter
- 47: Sicherungsring

- D₁: Außendurchmesser
- D₂: Innendurchmesser
- D₃: Außendurchmesser
- R: Innenradius
- S: Abstand
- X: erste Rotationsachse
- Y: zweite Rotationsachse
- Z: dritte Rotationsachse

## Patentansprüche

1. Winkelgetriebeanordnung für oszillierend angetriebene Mähmesser, mit einem Getriebegehäuse (1),
einer Eingangswelle (35), die durch eine Gehäuseöffnung (34) ins Innere des Getriebegehäuses (1) eingreift,
einem Rotor (4), der im Getriebegehäuse (1) über wenigstens ein erstes Lager (6) um eine erste Rotationsachse (X) drehbar gelagert ist, wobei der Rotor (4) einen Aufnahmeraum (7) mit einer Aufnahmeöffnung (8) aufweist,
einer durch die Aufnahmeöffnung (8) in den Aufnahmeraum (7) des Rotors (4) eingreifenden Kurbelwelle (5), die im Aufnahmeraum (7) über wenigstens ein zweites Lager (20) um eine zweite Rotationsachse (Y) drehbar gelagert ist, einem mit dem Rotor (4) drehfest verbundenes und über wenigstens ein drittes Lager (13) um die erste Rotationsachse (X) drehbar gelagertes Antriebselement (10),
wobei die zweite Rotationsachse (Y) radial zur ersten Rotationsachse (X) versetzt angeordnet ist, und wobei die Eingangswelle (35) im Getriebegehäuse (1) über wenigstens ein viertes Lager (39) um eine winklig zur ersten Rotationsachse (X) angeordnete dritte Rotationsachse (Z) drehbar gelagert ist, und
im Getriebegehäuse (1) angeordneten Stützmitteln (15), an denen sich das dritte Lager (13) axial abstützt,
**dadurch gekennzeichnet,**
**dass** die Stützmittel (15) lösbar am Getriebegehäuse (1) befestigt sind.

2. Winkelgetriebeanordnung nach Anspruch 1, **dadurch gekennzeichnet,**
**dass** das dritte Lager (13) mit einer zur Aufnahmeöffnung (8) gerichteten Unterseite (14) des dritten Lagers (13) an den Stützmittel (15) abgestützt ist.

3. Winkelgetriebeanordnung nach Anspruch 1 oder 2, **dadurch gekennzeichnet, dass** die Stützmittel einen Sicherungsring (15) aufweisen, wobei der Sicherungsring (15) in eine sich in Umfangsrichtung erstreckende Innennut (16) des Getriebegehäuses (1) eingreift.

4. Winkelgetriebeanordnung nach einem der vorherigen Ansprüche, **dadurch gekennzeichnet,**
**dass** der Verlauf eines Innendurchmessers des Getriebegehäuses (1) vom Antriebselement (10) im Bereich eines größten Außendurchmessers (D₃) des Antriebselements (10) bis zu einer von der Kurbelwelle (5) durchgriffenen Gehäuseöffnung (3) stets größer als der maximale Außendurchmesser (D₃) des Antriebselements (10) ist.

5. Winkelgetriebeanordnung nach einem der vorherigen Ansprüche, **dadurch gekennzeichnet,**
**dass** das Getriebegehäuse (1) einteilig ausgebildet ist.

6. Winkelgetriebeanordnung nach einem der vorherigen Ansprüche, **dadurch gekennzeichnet,**
**dass** im Getriebegehäuse (1) wenigstens ein axiales Anschlagelement (18) vorgesehen ist, wobei eine von der Aufnahmeöffnung (8) weggerichtete Oberseite (17) des dritten Lagers (13) mit dem Anschlagelement (18) in Anlage steht.

7. Winkelgetriebeanordnung nach einem der vorherigen Ansprüche, **dadurch gekennzeichnet,**
**dass** die Kurbelwelle (5) mit einem Stirnrad (21) drehfest verbunden ist, wobei die Kurbelwelle (5) und das Stirnrad (21) separate Bauteile sind.

8. Winkelgetriebeanordnung nach Anspruch 7, **dadurch gekennzeichnet,**
**dass** in einer Mantelfläche (22) des Rotors (4) eine Durchgangsöffnung (23) derart vorgesehen ist, dass das Stirnrad (21) radial zur zweiten Rotationsachse (Y) durch die Durchgangsöffnung (23) in den Aufnahmeraum (7) einsetzbar ist.

9. Winkelgetriebeanordnung nach Anspruch 7 oder 8, **dadurch gekennzeichnet, dass** ein Außendurchmesser (D₁) des Stirnrades (21) größer als ein Innenradius (R) des ersten Lagers (6) ist.

10. Winkelgetriebeanordnung nach einem der Ansprüche 7 bis 9, **dadurch gekennzeichnet,**
**dass** ein maximaler radialer Abstand (S) zwischen der ersten Rotationsachse (X) und einem Außenumfang (25) des Stirnrades (21) größer als ein Innendurchmesser (D₂) des zweiten Lagers (20) ist.

11. Winkelgetriebeanordnung nach einem der Ansprüche 7 bis 10, **dadurch gekennzeichnet,**
**dass** Sicherungsmittel (27, 30) vorgesehen und derart ausgebildet sind, dass das Stirnrad (21) axial gesichert ist.

12. Winkelgetriebeanordnung nach Anspruch 11, **dadurch gekennzeichnet,**
**dass** die Sicherungsmittel eine Sicherungsscheibe (27) aufweisen, wobei die Sicherungsscheibe (27) in eine Umfangsnut (28) der Kurbelwelle (5) eingreift.

13. Winkelgetriebeanordnung nach Anspruch 11 oder 12, **dadurch gekennzeichnet,**
**dass** die Sicherungsmittel eine von der Kurbelwelle (5) durchgriffene Distanzhülse (30) aufweisen, wobei die Distanzhülse (30) zwischen dem Stirnrad (21) und dem zweiten Lager (20) derart angeordnet ist, dass das Stirnrad (21) axial am zweiten Lager (20) abgestützt ist.

14. Winkelgetriebeanordnung nach Anspruch 13, **dadurch gekennzeichnet,**
**dass** die Distanzhülse (30) und die Kurbelwelle (5) drehfest miteinander verbunden sind.

15. Winkelgetriebeanordnung nach Anspruch 14, **dadurch gekennzeichnet,**
**dass** die Distanzhülse (30) und die Kurbelwelle (5) mittels einer Feder-Nut-Verbindung drehfest miteinander verbunden sind, und dass die Kurbelwelle (5) und das Stirnrad (21) mittels einer Feder-Nut-Verbindung drehfest miteinander verbunden sind, wobei für die Feder-Nut-Verbindung zwischen der Kurbelwelle (5) und dem Stirnrad (21) und für die Feder-Nut-Verbindung zwischen der Kurbelwelle (5) und der Distanzhülse (30) insgesamt nur eine einzige Feder (32) vorgesehen ist.

16. Winkelgetriebeanordnung nach Anspruch 15, **dadurch gekennzeichnet,**
**dass** die Feder (32) für die Feder-Nut-Verbindungen in eine erste Axialnut (31) des Stirnrades (21) und in eine zur ersten Axialnut (31) ausgerichtete zweite Axialnut (33) der Distanzhülse (30) eingreift.

17. Winkelgetriebeanordnung nach einem der vorherigen Ansprüche, **dadurch gekennzeichnet,**
**dass** die Winkelgetriebeanordnung weiterhin aufweist:
ein mit der Eingangswelle (35) drehfest verbundenes weiteres Antriebselement (36), das mit dem dem Rotor (4) zugeordneten Antriebselement (10) in Wirkverbindung steht,
ein mit der Eingangswelle (35) verbundenes Antriebsrad (40),
wobei das Antriebsrad (40) unmittelbar mit dem weiteren Antriebselement (36) mittels Drehsicherungsmittel (41) drehfest verbunden ist.

## Claims

1. Angular gear arrangement for mower knife driven in an oscillating manner, comprising
a transmission housing (1),
an input shaft (35), which engages in the interior of the transmission housing (1) through a housing opening (34),
a rotor (4), which is mounted in the transmission housing (1) so as to be rotatable about a first axis of rotation (X) by means of at least one first bearing (6), the rotor (4) having a receiving space (7) having a receiving opening (8),
a crankshaft (5), which engages in the receiving space (7) of the rotor (4) through the receiving opening (8) and which is mounted in the receiving space (7) so as to be rotatable about a second axis of rotation (Y) by means of at least one second bearing (20),
a driving element (10), which is non-rotationally connected to the rotor (4) and which is mounted so as to be rotatable about the first axis of rotation (X) by means of at least one third bearing (13),
wherein the second axis of rotation (Y) about which the crankshaft (5) is rotatably supported is arranged radially offset with respect to the first axis of rotation (X) about which the rotor (4) is rotatably mounted, and wherein the input shaft (35) is mounted in the transmission housing (1) so as to be rotatable about third axis of rotation (Z) arranged at an angle to the first axis of rotation (X) by means of at least one fourth bearing (39), and
support means (25), which are arranged in the transmission housing (1) and on which the third bearing (13) is axially supported,
**characterised in**
**that** the support means (15) being releasably fastened to the transmission housing (1).

2. Angular gear arrangement according to claim 1,
**characterised in**
**that** the third bearing (13) is supported with a lower face (14) of the third bearing (13) being directed to the receiving opening (8) on the support means (15).

3. Angular gear arrangement according to any one of claims 1 or 2,
**characterised in**
**that** the support means have a retaining ring (15), wherein the retaining ring (15) engages in an inner groove (16) of the transmission housing (1) extending in circumferential direction.

4. Angular gear arrangement according to any one of the preceding claims,
**characterised in**
**that** the extension of an inner diameter of the transmission housing (1) starting from the driving element (10) in the area of the largest outer diameter (D₃) of the driving element (10) up to a housing opening (3), through which the crankshaft (5) passes, is always larger than the maximal outer diameter (D₃) of the driving element (10).

5. Angular gear arrangement according to any one of the preceding claims,
**characterised in**
**that** the transmission housing (1) is a monoblock part.

6. Angular gear arrangement according to any one of the preceding claims,
**characterised in**
**that** in the transmission housing (1) at least one axial abutment element (18) is provided, wherein an upper face (17) of the third bearing (13), facing away from the receiving opening (8), abuts the abutment element (18).

7. Angular gear arrangement according to any one of the preceding claims,
**characterised in**
**that** the crankshaft (5) is non-rotationally connected to a spur gear (21), wherein the crankshaft (5) and the spur gear (21) are separate components.

8. Angular gear arrangement according to claim 7,
**characterised in**
**that** in an envelope face (22) of the rotor (4) a through opening (23) is provided such that the spur gear (21) is radially insertable relative to the second axis of rotation (Y) through the through opening (23) into the receiving space (7).

9. Angular gear arrangement according to claim 7 or 8,
**characterised in**
**that** an outer diameter (D₁) of the spur gear (21) is larger than an inner radius (R) of the first bearing (6).

10. Angular gear arrangement according to any one of claims 7 to 9,
**characterised in**
**that** a maximal radial distance (S) between the first axis of rotation (X) and an outer circumference (25) of the spur gear (21) is larger than an inner diameter (D₂) of the second bearing (20).

11. Angular gear arrangement according to any one of claims 7 to 10,
**characterised in**
**that** retaining means (27, 30) are provided and formed such that the spur gear (21) is axially retained.

12. Angular gear arrangement according to claim 11,
**characterised in**
**that** the retaining means comprise a retaining washer (27), wherein the retaining washer (27) engages in a circumferential groove (28) of the crankshaft (5).

13. Angular gear arrangement according to claim 11 or 12,
**characterised in**
**that** the retaining means have a distance sleeve (30), through which the crankshaft (5) passes, wherein the distance sleeve (30) is arranged between the spur gear (21) and the second bearing (20) such that the spur gear (21) is axially supported on the second bearing (20).

14. Angular gear arrangement according to claim 13,
**characterised in**
**that** the distance sleeve (30) and the crankshaft (5) are non-rotationally connected to each other.

15. Angular gear arrangement according to claim 14,
**characterised in**
**that** the distance sleeve (30) and the crankshaft (5) are non-rotationally connected to each other by means of a tongue and groove connection, and that the crankshaft (5) and the spur gear (21) are non-rotationally connected to each other by means of a tongue and groove connection, wherein for the tongue and groove connection between the crankshaft (5) and the spur gear (21) and for the tongue and groove connection between the crankshaft (5) and the distance sleeve (30) in total only a single tongue (32) is provided.

16. Angular gear arrangement according to claim 15,
**characterised in**
**that** the tongue (32) for the tongue and groove connections engages in a first axial groove (31) of the spur gear (21) and in a second axial groove (33) of the distance sleeve (30) being aligned to the first axial groove (31).

17. Angular gear arrangement according to any one of the preceding claims,
**characterised in**
**that** the angular gear arrangement further comprises:
a further driving element (36), non-rotationally connected to the input shaft (35) and operatively connected to the driving element (10) being assigned to the rotor (4),
a drive wheel (40) connected to the input shaft (35),
wherein the drive wheel (40) is non-rotationally and directly connected to the further driving element (36) by means of anti-rotation means (41).

## Revendications

1. Ensemble d'engrenage angulaire pour des lames de fauchage entraînées de façon oscillante, comprenant
un carter d'engrenage (1),
un arbre d'entrée (35) s'introduisant à l'intérieur du carter d'engrenage (1) à travers une ouverture de carter (34),
un rotor (4) monté de façon rotative autour d'un premier axe de rotation (X) dans le carter d'engrenage (1) par au moins un premier palier (6), le rotor (4) présentant une première chambre de réception (7) avec une ouverture de réception (8),
un vilebrequin (5) s'introduisant dans la chambre de réception (7) du rotor (4) à travers l'ouverture de réception (8), lequel est monté de façon rotative autour d'un deuxième axe de rotation (Y) dans la chambre de réception (7) par au moins un deuxième palier (20),
un élément d'entraînement (10) monté de façon rotative autour du premier axe de rotation (X) par au moins un troisième palier (13) et relié au rotor (4) de façon solidaire en rotation,
dans lequel le deuxième axe de rotation (Y) est disposé de façon radialement décalée par rapport au premier axe de rotation (X), et dans lequel l'arbre d'entrée (35) est monté de façon rotative autour d'un troisième axe de rotation (Z) disposé de façon angulaire par rapport au premier axe de rotation (X) dans le carter d'engrenage (1) par au moins un quatrième palier (39), et
des moyens d'appui (15) disposés dans le carter d'engrenage (1), sur lesquels s'appuie axialement le troisième palier (13),
**caractérisé en ce que**
les moyens d'appui (15) sont fixés de façon détachable au carter d'engrenage (1).

2. Ensemble d'engrenage angulaire selon la revendication 1, **caractérisé en ce que**
le troisième palier (13) s'appuie sur les moyens d'appui (15) avec une face inférieure (14) du troisième palier (13) tournée vers l'ouverture de réception (8).

3. Ensemble d'engrenage angulaire selon la revendication 1 ou 2, **caractérisé en ce que**
les moyens d'appui comportent une bague de blocage (15), la bague de blocage (15) s'introduisant dans une rainure intérieure (16) du carter d'engrenage (1) s'étendant dans la direction périphérique.

4. Ensemble d'engrenage angulaire selon l'une des revendications précédentes, **caractérisé en ce que**
l'évolution d'un diamètre intérieur du carter d'engrenage (1), à partir de l'élément d'entraînement (10) dans la région d'un diamètre extérieur maximal (D₃) de l'élément d'entraînement (10) jusqu'à une ouverture de carter (3) traversée par le vilebrequin (5), est toujours plus grande que le diamètre extérieur maximal (D₃) de l'élément d'entraînement (10).

5. Ensemble d'engrenage angulaire selon l'une des revendications précédentes, **caractérisé en ce que**
le carter d'engrenage (1) est conçu d'une seule pièce.

6. Ensemble d'engrenage angulaire selon l'une des revendications précédentes, **caractérisé en ce qu'**
au moins un élément de butée axial (18) est prévu dans le carter d'engrenage (1), une face supérieure (17) du troisième palier (13) détournée de l'ouverture de réception (8) étant en contact avec l'élément de butée (18).

7. Ensemble d'engrenage angulaire selon l'une des revendications précédentes, **caractérisé en ce que**
le vilebrequin (5) est solidaire en rotation à un engrenage droit (21), le vilebrequin (5) et l'engrenage droit (21) étant des composants séparés.

8. Ensemble d'engrenage angulaire selon la revendication 7, **caractérisé en ce qu'**
une ouverture de passage (23) est prévue de telle façon dans une surface d'enveloppe (22) du rotor (4), que l'engrenage droit (21) peut être inséré radialement par rapport au deuxième axe de rotation (Y) à travers l'ouverture de passage (23) dans la chambre de réception (7).

9. Ensemble d'engrenage angulaire selon la revendication 7 ou 8, **caractérisé en ce qu'**
un diamètre extérieur (D₁) de l'engrenage droit (21) est supérieur à un rayon intérieur (R) du premier palier (6).

10. Ensemble d'engrenage angulaire selon l'une des revendications 7 à 9, **caractérisé en ce qu'**
un écart radial maximal (S) entre le premier axe de rotation (X) et un pourtour extérieur (25) de l'engrenage droit (21) est supérieur à un diamètre intérieur (D₂) du deuxième palier (20).

11. Ensemble d'engrenage angulaire selon l'une des revendications 7 à 10, **caractérisé en ce que**
des moyens de blocage (27, 30) sont prévus et conçus de manière à bloquer axialement l'engrenage droit (21).

12. Ensemble d'engrenage angulaire selon la revendication 11, **caractérisé en ce que**
les moyens de blocage comportent une rondelle de blocage (27), la rondelle de blocage (27) s'engageant dans une rainure périphérique (28) du vilebrequin (5).

13. Ensemble d'engrenage angulaire selon la revendication 11 ou 12, **caractérisé en ce que**
les moyens de blocage comportent une douille d'espacement (30) traversée par le vilebrequin (5), la douille d'espacement (30) étant disposée de telle façon entre l'engrenage droit (21) et le deuxième palier (20), que l'engrenage droit (21) s'appuie axialement sur le deuxième palier (20).

14. Ensemble d'engrenage angulaire selon la revendication 13, **caractérisé en ce que**
la douille d'espacement (30) et le vilebrequin (5) sont reliés entre eux de façon solidaire en rotation.

15. Ensemble d'engrenage angulaire selon la revendication 14, **caractérisé en ce que**
la douille d'espacement (30) et le vilebrequin (5) sont reliés entre eux de façon solidaire en rotation au moyen d'une liaison à ressort et rainure, et **en ce que** le vilebrequin (5) et l'engrenage droit (21) sont reliés entre eux de façon solidaire en rotation au moyen d'une liaison à ressort et rainure, un seul ressort (32) étant prévu pour la liaison à ressort et rainure entre le vilebrequin (5) et l'engrenage droit (21) et pour la liaison à ressort et rainure entre le vilebrequin (5) et la douille d'espacement (30).

16. Ensemble d'engrenage angulaire selon la revendication 15, **caractérisé en ce que**
le ressort (32) pour les liaisons à ressort et rainure s'engage dans une première rainure axiale (31) de l'engrenage droit (21) et dans une deuxième rainure axiale (33) de la douille d'espacement (30), laquelle est orientée vers la première rainure axiale (31).

17. Ensemble d'engrenage angulaire selon l'une des revendications précédentes, **caractérisé en ce que**
l'ensemble d'engrenage angulaire comprend en outre :
un autre élément d'entraînement (36) relié de façon solidaire en rotation à l'arbre d'entrée (35), lequel est relié fonctionnellement à l'élément d'entraînement (10) attribué au rotor (4),
une roue d'entraînement (40) reliée à l'arbre d'entrée (35),
dans lequel la roue d'entraînement (40) est reliée directement à l'autre élément d'entraînement (36) de façon solidaire en rotation par des moyens de blocage en rotation (41).
